# FASCICULE DE BREVET EUROPEEN

(11) **EP 2 673 518 B1**
(45) Date de publication et mention de la délivrance du brevet: **28.02.2018**
(21) Numéro de dépôt: 12701252.4
(22) Date de dépôt: 26.01.2012
(51) Int. Cl.: F16D 3/68

(54) **DISPOSITIF D'ACCOUPLEMENT EN ROTATION ISOLANT ÉLECTRIQUEMENT AMÉLIORÉ, ET ADAPTATEUR POUR OUTIL COMPORTANT UN TEL DISPOSITIF**
VERBESSERTE ELEKTRISCH ISOLIERENDE ELEKTRISCHE ROTATIONSKUPPLUNGSVORRICHTUNG UND WERKZEUGADAPTER MIT EINER SOLCHEN VORRICHTUNG
IMPROVED ELECTRICALLY INSULATING ELECTRICAL ROTATION COUPLING DEVICE AND TOOL ADAPTOR COMPRISING SUCH A DEVICE

(30) Priorité: 08.02.2011 FR 1100388
(43) Date de publication de la demande: 18.12.2013
(73) Titulaire: Stanley Works (Europe) GmbH, 8600 Dübendorf (CH)
(72) Inventeur: DEMARETZ, Thierry, F-77720 Grandpuits (FR)
(74) Mandataire: SBD IPAdmin
(86) Numéro de dépôt international: PCT/EP2012/051235
(87) Numéro de publication internationale: WO 2012/107299

(56) Documents cités:
- EP-A2- 1 116 555
- WO-A1-2010/060625
- FR-A1- 2 135 386
- JP-A- 2006 083 953
- US-A- 4 034 575
- US-A- 4 172 369
- US-A- 4 927 403

## Description

La présente invention concerne un dispositif d'accouplement en rotation isolant électriquement comprenant une première et une deuxième têtes d'accouplement s'étendant de manière sensiblement alignée suivant un axe longitudinal, la première tête comportant au moins une partie mâle s'étendant sensiblement axialement et la deuxième tête comportant au moins une partie femelle axiale associée coopérant pour transmettre le couple de rotation ; un organe intermédiaire comportant des moyens d'isolation électrique agencés de telle manière que les parties mâle et femelle de transmission de couple sont isolées électriquement l'une par rapport à l'autre.

Dans le domaine de l'électricité ou de l'électromécanique, il est fréquent d'utiliser des outils isolés électriquement pour intervenir sur des organes sous tension électrique. Les opérateurs mettant en oeuvre des outils isolés travaillent sur ces organes dans des conditions de sécurité satisfaisantes.

Toutefois, les outils isolés ne préviennent pas les risques d'endommagement électrique des équipements électroniques disposés en amont de l'outil isolé par rapport aux organes sous tension électrique disposés en aval dudit outil.

Il est connu du brevet US-A-2,025,838 d'accoupler deux extrémités d'arbres alignés de façon élastique et isolée par l'intermédiaire d'un organe de transmission dans un matériau non métallique introduit entre deux têtes d'accouplement agissant conjointement. L'organe de transmission a pour fonction d'isoler électriquement lesdites têtes l'une par rapport à l'autre. Cependant, un tel dispositif n'est pas prévu pour supporter un champ électrique élevé et ne permet pas une protection efficace des équipements.

Il est connu de la publication de brevet US4,927,403 d'accoupler deux arbres alignés de façon isolée par l'intermédiaire d'un organe de transmission dans un matériau non métallique introduit entre deux têtes d'accouplement agissant conjointement.

Il est connu des publications de brevet US4,034,757, US4,172,369, US2011/0319176 et JP2006083953 d'accoupler deux arbres alignés de façon élastique par l'intermédiaire d'un organe de transmission dans un matériau non métallique introduit entre deux têtes d'accouplement agissant conjointement.

L'invention a pour but d'améliorer la protection électrique d'un dispositif d'accouplement.

A cet effet, l'invention a pour objet un dispositif d'accouplement isolant électriquement du type précité, caractérisé en ce que l'organe intermédiaire comprend un cloisonnement isolant électriquement transversal par rapport à l'axe longitudinal et disposé selon l'intégralité du joint d'assemblage entre les première et deuxième têtes.

Ainsi, l'invention assure une isolation sûre contre les arcs électriques et en ce que l'organe intermédiaire comprend un tronçon central s'étendant axialement suivant l'axe longitudinal et délimité par deux faces d'extrémité transversales.

Selon d'autres caractéristiques :
- les moyens d'isolation électrique et le cloisonnement isolant électriquement transversal de l'organe intermédiaire sont d'un seul tenant ;
- les première et/ou deuxième têtes est(sont) une(des) pièce(s) usinée(s) en acier et l'organe intermédiaire est une pièce moulée en un matériau plastique de rigidité diélectrique élevée;

La présente invention concerne également un adaptateur apte à être accouplé à au moins un outil, l'adaptateur comportant une extrémité d'entraînement apte à être reliée à un premier outil entraînant, en particulier une machine de vissage, et une extrémité entraînée apte à être reliée à un deuxième outil entraîné, en particulier une douille de vissage, caractérisé en ce qu'il comprend un dispositif d'accouplement tel que décrit précédemment.

Selon d'autres caractéristiques :
- les premier et deuxième têtes comportent respectivement une extrémité d'entraînement à profil femelle et une extrémité entraînée à profil mâle ;
- l'adaptateur comprend, en outre, un revêtement extérieur en matériau électriquement isolant, en particulier comportant 1 ou plusieurs couches obtenue(s) par trempage ;

La présente invention concerne aussi l'utilisation d'un adaptateur tel que décrit précédemment pour visser ou dévisser des organes maintenus sous tension électrique inférieure ou égale à 1000 volts en courant alternatif et inférieure ou égale à 1500 volts en courant continu, en particulier pour la pose ou la maintenance de batteries d'alimentation de véhicules électriques.

L'invention et ses avantages seront mieux compris à la lecture de la description qui va suivre, donnée uniquement à titre d'exemple et faite en se référant aux dessins annexés, sur lesquels :
- Les figures 1 et 2 sont respectivement des vues en perspective et en perspective éclatée d'un dispositif d'accouplement selon l'invention,
- la figure 3 est une vue analogue à la figure 2 d'une première variante du dispositif selon l'invention,
- la figure 4 est une vue analogue à la figure 2 orientée à l'inverse d'une deuxième variante du dispositif selon l'invention,
- la figure 5 est une vue en perspective d'un adaptateur comportant le dispositif d'accouplement de la figure 4,
- la figure 6 est une vue de côté selon la flèche VI de la figure 5,
- la figure 7 est une vue en coupe selon les lignes VII de la figure 6
- la figure 8 est une vue en coupe selon les lignes VIII de la figure 6.

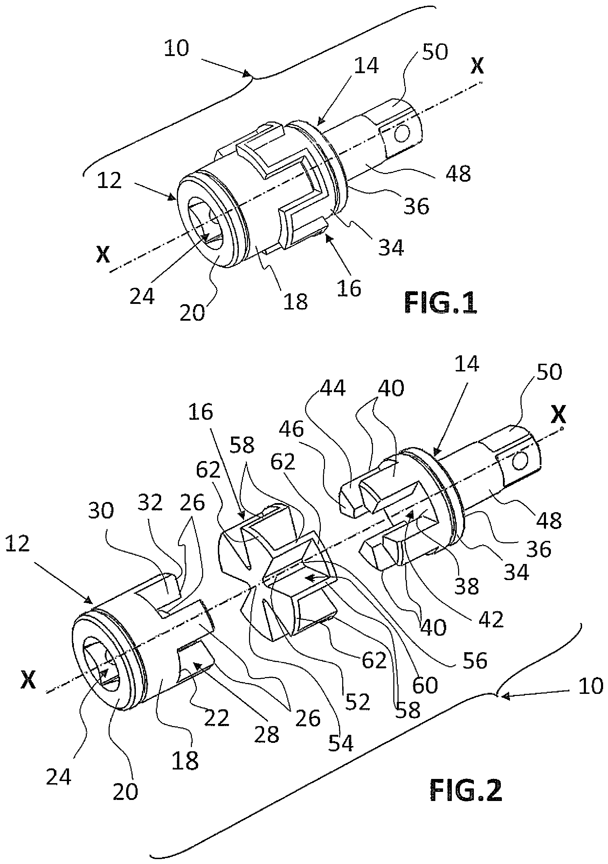

Les termes « intérieur » et « extérieur » utilisés dans la description qui va suivre, s'entendent suivant l'orientation de l'assemblage des figures 1 à 5, 7 et 8

Les figures 1 et 2 représentent un dispositif d'accouplement en rotation 10 destiné à accoupler, dans une position de travail, une machine menante et un objet mené (non représentés).

Le dispositif 10 s'étend suivant un axe longitudinal X-X. Il comprend une première tête 12 définissant une partie entraînante en rotation par rapport à l'axe X-X, et une seconde tête 14 définissant une partie entraînée en rotation par rapport au même axe, les têtes étant sensiblement alignées suivant l'axe X-X. Chacune des têtes 12 ou 14 est métallique et fabriquée, de préférence d'une seule pièce par usinage, en acier.

Le dispositif 10 comprend également un organe intermédiaire 16 qui est disposé assemblé entre les têtes 12 et 14. Il a pour but de transmettre le couple de la première tête 12 à la deuxième tête 14, et d'isoler électriquement les dites têtes l'une par rapport à l'autre. L'organe intermédiaire 16 est non métallique et moulé, de préférence d'un seul tenant, en matière plastique dont la caractéristique de rigidité diélectrique est élevée pour obtenir une isolation électrique efficace, en particulier en PETP (polyéthylène téréphtalate) ou en PEEK (polyétheréthercétone).

La tête entraînante 12 comporte un corps sensiblement cylindrique 18 délimité par une première face 20 extérieure et une deuxième face 22 intérieure (figure 2), toutes deux sensiblement perpendiculaires à l'axe X-X.

La face extérieure 20 comprend un moyen d'accouplement 24 sous forme d'une cavité comportant un profil femelle de section transversale carrée.

Au moins un plot 26 (figure 2), de préférence une pluralité de plots, en particulier quatre plots 26 (figure 2), est (sont) disposé (s) en saillie axiale à partir de la face intérieure 22 suivant l'axe X-X. Les plots 26 de la figure 2 sont identiques et ont la forme d'un élément de tore de section rectangulaire et présentent une section transversale par rapport à l'axe X-X en forme de secteur d'angle d'environ 45°. Leurs dimensions axiales sont égales. Les plots 26 sont répartis de la manière équidistante angulairement par rapport à l'axe X-X. Ainsi, un plot 26 est adjacent à un évidement 28 également en forme de secteur d'angle identique mais de dimension transversale supérieure à celle du plot. Pour la clarté de la figure 2, un seul des évidements 28 est référencé. Chaque plot 26 comprend principalement deux faces latérales 30 radiales et une face d'extrémité libre 32 transversale.

La tête entraînée 14 comporte également un corps sensiblement cylindrique 34 délimité par une première face 36 extérieure et une deuxième face 38 intérieure (figure 2), toutes deux sensiblement perpendiculaires à l'axe X-X.

Au moins un plot 40 (figure 2), de préférence une pluralité de plots identique en nombre à celui des plots 26 de la tête 12, en particulier quatre plots 40 (figure 2), est (sont) disposé (s) en saillie axiale à partir de la face intérieure 38 suivant l'axe X-X. Les plots 40 de la tête 14 sont sensiblement identiques aux plots 26 de la tête 12 et sont répartis de la même manière par rapport à l'axe X-X. Leurs dimensions axiales sont égales. Un plot 40 est adjacent à un évidement 42 en forme générale de secteur d'angle identique mais de dimension transversale supérieure à celle du plot. Pour la clarté de la figure 2, un seul des évidements 42 est référencé. Chaque plot 40 comprend principalement deux faces latérales 44 radiales et une face d'extrémité libre 46 transversale.

Un arbre cylindrique 48 s'étend axialement en saillie par rapport à la face 36 extérieure de la tête 14 suivant l'axe X-X. L'extrémité libre de l'arbre 48 comporte un moyen d'accouplement 50 sous forme d'un profil mâle de section transversale carrée.

L'organe intermédiaire 16 de transmission comporte d'une part, des formes complémentaires adaptées pour coopérer, au jeu près, avec le ou chaque plot 26 et le ou chaque évidement 28 de la tête 12 et, d'autre part, des formes complémentaires adaptées pour coopérer, également au jeu près, avec le ou chaque plot 40 et le ou chaque évidement 42 de la tête 14.

Pour cela, l'organe intermédiaire 16 comprend un tronçon central 52 s'étendant axialement suivant l'axe X-X et délimité par deux faces d'extrémité 54 et 56 transversales.

Au moins deux ailettes 58 (figure 2), de préférence une pluralité d'ailettes en nombre égal au double de celui des plots, en particulier huit ailettes 58 (sur la figure 2, seules quatre ailettes sont visibles et référencées), s'étendent à partir du tronçon central 52 radialement par rapport à l'axe X-X et axialement depuis la face d'extrémité 54 jusqu'à la face d'extrémité 56. Les ailettes 58 sont réparties de manière équidistante angulairement par rapport à l'axe X-X.

L'organe intermédiaire 16 comporte au moins un logement 60 de réception qui sépare deux ailettes adjacentes 58, de préférence une pluralité de logements en nombre égal au double de celui des plots, en particulier huit logements 60 (figure 2). Pour la clarté de la figure 2, un seul des logements 60 est référencé.

Les première et deuxième têtes 12 et 14 sont agencées de telle manière que le ou chaque plot d'un des premier ou deuxième corps 18 et 34 est reçu, par emboîtement axial et avec jeu, dans un évidement correspondant de l'autre desdits premier ou deuxième corps auquel il est associé, les ailettes 58 de l'organe intermédiaire 16 étant interposées entre le ou chaque plot 26 du premier corps 18 et le ou chaque plot 40 adjacent du deuxième corps 34 de façon à ce que les têtes 12 et 14 sont isolées électriquement l'une par rapport à l'autre.

La structure du dispositif d'accouplement 10 est telle que les logements 60 de l'organe intermédiaire 16 sont propres à recevoir en alternance le ou un des plots 26 de la tête entraînante 12 et le ou un des plots 40 de la tête entraînée 14 par emboitement axial.

De cette manière, chaque ailette 58 maintient à distance les faces latérales 30 et 44 respectives des plots 26 et 40 adjacents, en isolant électriquement lesdites faces latérales les unes par rapport aux autres.

La dimension axiale de l'organe intermédiaire 16 est telle, qu'après emboitement axial de l'organe 16 entre les deux têtes 12 et 14, la face d'extrémité libre 32 de chaque plot 26 de la tête 12 est à distance de la face intérieure 38 du corps 34 de la tête 14 correspondant au fond de l'évidement 42 associé, et telle que la face d'extrémité libre 46 de chaque plot 40 de la tête 14 est également maintenue distante de la face intérieure 22 du corps 18 de la tête 12 correspondant au fond de l'évidement 28 associé.

L'organe intermédiaire 16 comprend un cloisonnement 62 isolant électriquement transversal par rapport à l'axe X-X et disposé selon l'intégralité du joint d'assemblage entre les première et deuxième têtes 12 et 14.

Pour cela, l'organe intermédiaire 16 comporte au moins une cloison 62, de préférence une pluralité de cloisons en nombre égal à celui des ailettes, en particulier huit cloisons 62 (sur la figure 2, seules trois cloisons 62 sont visibles et référencées) disposées transversalement par rapport à l'axe X-X. Elles occupent les espaces entre, d'une part, le ou les plot(s) 26 et le fond de l'évidement 42 associé et, d'autre part, le ou les plot(s) 40 et le fond de l'évidement 28 associé. Chaque cloison 62 s'étend depuis le tronçon central 52 jusqu'à l'extrémité libre d'une ailette 58 et relie deux ailettes 58 adjacentes. Les cloisons 62 sont disposées en alternance dans le prolongement de chacune des faces d'extrémité 54 et 56 du tronçon 52. En d'autres termes, pour deux logements 60 voisins, l'un est ouvert sur la face d'extrémité 54 de l'organe intermédiaire 16, et l'autre sur la face d'extrémité 56 opposée.

L'épaisseur des ailettes 58 et celle des cloisons 62 sont sensiblement égales.

L'organe intermédiaire 16 est d'un seul tenant, compact et a pour fonction d'être une barrière continue et électriquement isolante entre les têtes 12 et 14. De plus, les extrémités libres des ailettes 58 et cloisons 62 sont, au joint d'assemblage, en relief (figure 1) par rapport à la surface extérieure des têtes 12 et 14, ce qui assure une isolation efficace contre les arcs électriques.

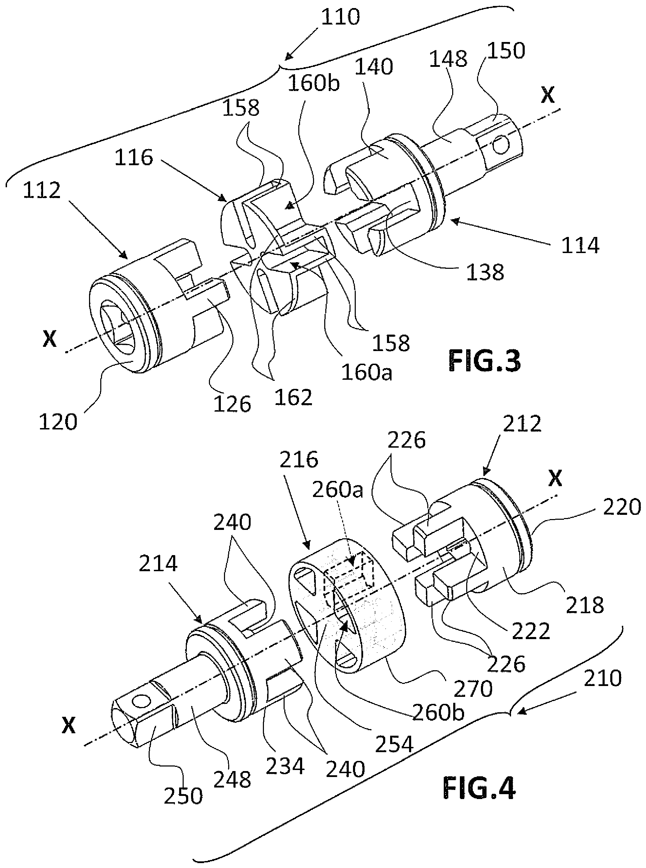

Le dispositif d'accouplement 110 de la figure 3 représente une variante du dispositif 10 des figures 1 et 2. Pour faciliter la compréhension, les références numériques des éléments qui gardent leur fonction sont conservées et augmentées de cent.

Le dispositif d'accouplement 110 diffère du dispositif 10 en ce que les plots 126 et 140 respectifs des têtes 112 et 114 ne présentent pas la même section transversale, à savoir que la section transversale des plots 126 est rectangulaire tandis que celle des plots 140 est en secteur d'angle d'environ 90°. Il en résulte que les logements 160a de l'organe intermédiaire 116 destinés à recevoir de façon complémentaire les plots 126 de la tête 112 sont de forme et de dimension différentes des logements 160b du même organe destinés à recevoir de façon complémentaire les plots 140 de la tête 114. Pour la clarté de la figure 3, un seul des logements 160a et un seul des logements 160b sont référencés.

Les ailettes radiales 158 sont disposées symétriquement en parallèle deux par deux. L'organe intermédiaire 116 fonctionne de la même manière que précédemment comme une barrière continue, électriquement isolante entre les têtes 112 et 114.

Le dispositif d'accouplement 210 de la figure 4 représente une autre variante du dispositif 10 des figures 1 et 2. Pour faciliter la compréhension, les références numériques des éléments qui gardent leur fonction sont conservées et augmentées de deux cents.

Le dispositif d'accouplement 210 diffère du dispositif 110 en ce que l'organe intermédiaire 216 comprend, en outre, une paroi périphérique 270 extérieure circulaire et continue, d'épaisseur sensiblement égale à celles des ailettes et des cloisons et reliant l'extrémité radiale extérieure de ces dernières. L'organe intermédiaire 216 présente une forme cylindrique dont le diamètre extérieur est légèrement supérieur à celui des corps respectifs 218 et 234 des têtes 212 et 214. Après assemblage entre les corps 218 et 234, l'organe intermédiaire 216 coiffe partiellement celles-ci en regard du joint d'assemblage.

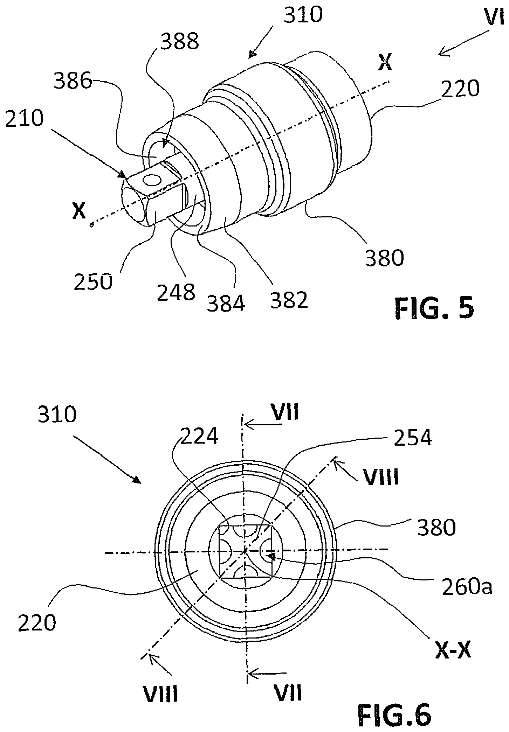

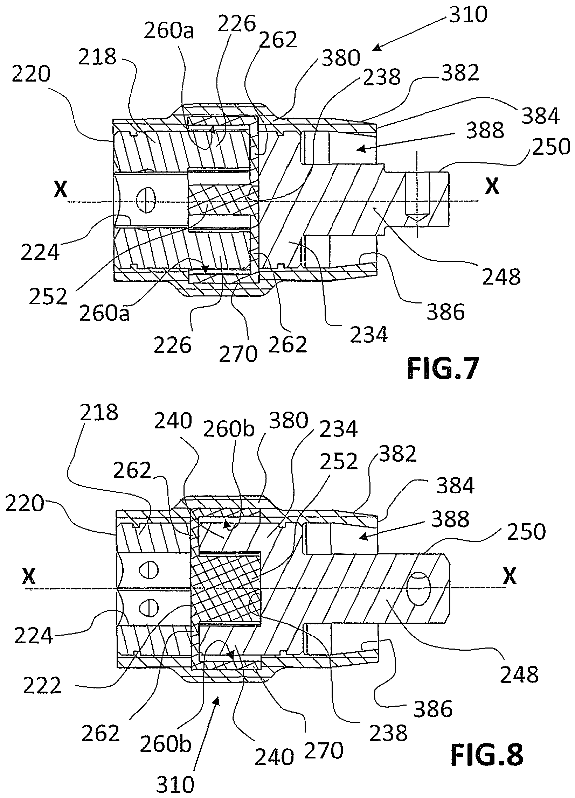

L'invention concerne également un adaptateur 310, représenté dans les figures 5 à 8, et apte à être accouplé à au moins un outil, l'adaptateur comportant une extrémité d'entraînement apte à être reliée à un premier outil entraînant, en particulier une machine de vissage, et une extrémité entraînée apte à être reliée à un deuxième outil entraîné, en particulier une douille de vissage. L'adaptateur 310 comprend l'un des dispositifs 10, 110, 210 d'accouplement isolants électriquement décrits précédemment, de préférence le dispositif d'accouplement 210 (figure 4) qui présente une paroi périphérique 270 (figures 7 et 8) circulaire et continue. Pour la clarté de la figure 4, un seul des logements 260a (représenté en traits discontinus) et un seul des logements 260b sont référencés

L'adaptateur 310 comporte un revêtement isolant 380 extérieur épais pouvant comporter une ou plusieurs couches de différentes couleurs en PVC (polychlorure de vinyle), ce qui a pour effet d'isoler électriquement l'opérateur de l'adaptateur. Le revêtement 380 est obtenu par trempage et il est solidaire de la superficie extérieure du dispositif d'accouplement 210, à l'exception des deux extrémités du dispositif comportant les moyens d'accouplement, à savoir la face extérieure 220 de la tête 212 et l'arbre 248 de la tête 214. Une jupe 382 prolonge axialement extérieurement le revêtement 380 autour de l'arbre 248, l'extrémité libre 384 de la jupe 382 étant en retrait axial par rapport au profil carré d'entraînement mâle 250. La face intérieure 386 de la jupe 382 est distante de l'arbre 248, créant un espace 388 permettant un chevauchement de la jupe isolante 382 avec un autre outil isolé (non représenté), tel qu'une douille, assemblé au carré d'entraînement mâle 250.

L'adaptateur 310, qui est à la fois isolant et isolé, est utilisé pour visser ou dévisser des organes maintenus sous une tension électrique inférieure ou égale à 1000 volts en courant alternatif ou inférieure ou égale à 1500 volts en courant continu, en particulier pour la pose ou la maintenance de batteries d'alimentation de véhicules électriques.

Dans le mode de réalisation décrit précédemment, le revêtement isolant et l'organe intermédiaire sont deux éléments distincts. Dans une variante non représentée, le revêtement isolant extérieur est d'un seul tenant venu de matière avec l'organe intermédiaire par surmoulage d'un matériau plastique approprié sur les têtes.

Dans la description précédente, l'adaptateur comprend deux têtes métalliques et des moyens d'accouplement comportant des carrés d'entraînement mâle et femelle. Une seule des têtes peut être métallique et d'autres types d'accouplement sont réalisables.

Grâce à l'invention, les utilisateurs travaillent en sécurité par rapport aux éventuels chocs électriques et les installations sur lesquelles ces utilisateurs interviennent sont préservées d'éventuels endommagements liés à un arc électrique. De plus, le dispositif d'accouplement et l'adaptateur pour outil correspondant sont simples, compacts, et d'un coût de fabrication économique.

## Revendications

1. Dispositif d'accouplement en rotation (10 ; 110 ; 210) isolant électriquement comprenant une première (12 ; 112 ; 212) et une deuxième (14 ; 114 ; 214) têtes d'accouplement s'étendant de manière sensiblement alignée suivant un axe longitudinal (X-X), la première tête comportant au moins une partie mâle (26 ; 126 ; 226) s'étendant sensiblement axialement et la deuxième tête comportant au moins une partie femelle (42 ; 142 ; 242) axiale associée coopérant pour transmettre le couple de rotation, les partie mâle et femelle étant adaptées pour former un joint d'assemblage entre les première (12 ; 112 ; 212) et deuxième (14 ; 1 14 ; 214) têtes ; un organe intermédiaire (16 ; 116 ; 216) comportant des moyens d'isolation électrique (52, 54, 56, 58) agencés de telle manière que les parties mâle (26 ; 126 ; 226) et femelle (42 ; 142 ; 242) de transmission de couple sont isolées électriquement l'une par rapport à l'autre, **caractérisé en ce que** l'organe intermédiaire (16 ; 1 16 ; 216) comprend un cloisonnement isolant électriquement transversal (62 ; 162 ; 262) par rapport à l'axe longitudinal (X-X) et disposé selon l'intégralité du joint d'assemblage entre les première (12 ; 112 ; 212) et deuxième (14 ; 1 14 ; 214) têtes et **en ce que** l'organe intermédiaire comprend un tronçon central (52) s'étendant axialement suivant l'axe longitudinal (X-X) et délimité par deux faces d'extrémité transversales (54, 56), **en ce qu'**au moins une des première (12 ; 1 12 ; 212) et deuxième (14 ; 114 ; 214) têtes est une pièce usinée en acier, et **en ce que** l'organe intermédiaire (16 ; 116 ; 216) est une pièce moulée en un matériau plastique de rigidité diélectrique élevée.

2. Dispositif selon la revendication 1, **caractérisée en ce que** les moyens d'isolation électrique (52, 54, 56, 58) et le cloisonnement isolant électriquement transversal (62 ; 162 ; 262) de l'organe intermédiaire (16 ; 1 16 ; 216) sont d'un seul tenant.

3. Adaptateur (310) apte à être accouplé à au moins un outil, l'adaptateur comportant une extrémité d'entraînement (24 ; 124 ; 224) apte à être reliée à un premier outil entraînant, en particulier une machine de vissage, et une extrémité entraînée (50 ; 150 250) apte à être reliée à un deuxième outil entraîné, en particulier une douille de vissage, **caractérisé en ce qu'**il comprend un dispositif d'accouplement (10 ; 110 ;210) selon l'une quelconque des revendications 1 à 2.

4. Adaptateur selon la revendication 3, **caractérisée en ce que** les première (12 ; 1 12 ; 212) et deuxième (14 ; 1 14 ; 214) têtes comportent respectivement une extrémité d'entraînement à profil femelle (24 ; 124 ; 224) et une extrémité entraînée à profil mâle (50 ; 150 250).

5. Adaptateur selon l'une quelconque des revendications 3 à 4, **caractérisée en ce qu'**il comprend, en outre, un revêtement (380) extérieur en matériau électriquement isolant, en particulier comportant 1 ou plusieurs couches obtenue(s) par trempage.

6. Utilisation d'un adaptateur (310) selon l'une quelconque des revendications 3 à 5 pour visser ou dévisser des organes maintenus sous une tension électrique inférieure ou égale à 1000 volts en courant alternatif et inférieure ou égale à 1500 volts en courant continu, en particulier pour la pose ou la maintenance de batteries d'alimentation de véhicules électriques.

## Patentansprüche

1. Elektrisch isolierende Drehkopplungsvorrichtung (10; 110; 210), die einen ersten (12; 112; 212) und einen zweiten (14; 114; 214) Kopplungskopf umfasst, die sich im Wesentlichen entlang einer Längsachse (X-X) erstrecken, wobei der erste Kopf mindestens ein Steckteil (26; 126; 226) umfasst, das sich im Wesentlichen axial erstreckt, und der zweite Kopf mindestens ein dazugehörendes axiales Buchsenteil (42; 142; 242) umfasst, um das Drehmoment zu übertragen, wobei das Steckteil und das Buchsenteil angepasst sind, um eine Zusammenfügeverbindung zwischen dem ersten (12; 112; 212) und dem zweiten (14; 114; 214) Kopf zu bilden; ein Zwischenelement (16; 116; 216), das Mittel zum elektrischen Isolieren (52, 54, 56, 58) umfasst, die derart eingerichtet sind, dass die Steckteile (26; 126; 226) und Buchsenteile (42; 142; 242) zur Drehmomentübertragung elektrisch voneinander isoliert sind, **dadurch gekennzeichnet, dass** das Zwischenelement (16; 116; 216) eine elektrisch isolierende Querabteilung (62; 162; 262) in Bezug auf die Längsachse (X-X) umfasst und die gemäß der gesamten Zusammenfügeverbindung zwischen dem ersten (12; 112; 212) und zweiten (14; 114; 214) Kopf angeordnet ist, und dass das Zwischenelement einen zentralen Abschnitt (52) umfasst, der sich axial entlang der Längsachse (X-X) erstreckt und von zwei Querendseiten (54, 56) begrenzt ist, dass der erste (12; 112; 212) und/oder der zweite (14; 114; 214) Kopf ein bearbeitetes Teil aus Stahl ist, und dass das Zwischenelement (16; 116; 216) ein Teil ist, das aus einem Kunststoff mit hoher Durchschlagfestigkeit geformt ist.

2. Vorrichtung nach Anspruch 1, **dadurch gekennzeichnet, dass** die Mittel zur elektrischen Isolierung (52, 54, 56, 58) und die elektrisch isolierende Querabteilung (62; 162; 262) des Zwischenelements (16; 116; 216) aus einem Stück bestehen.

3. Adapter (310), der geeignet ist, um mit mindestens einem Werkzeug gekoppelt zu sein, wobei der Adapter ein Antriebsende (24; 124; 224) umfasst, das geeignet ist, um mit einem ersten Antriebswerkzeug verbunden zu sein, insbesondere mit einer Schraubmaschine, und ein angetriebenes Ende (50; 150 250), das angepasst ist, um mit einem zweiten angetriebenen Werkzeug verbunden zu sein, insbesondere mit einer Schraubhülse, **dadurch gekennzeichnet, dass** er eine Kopplungsvorrichtung (10; 110; 210) nach einem der Ansprüche 1 bis 2 umfasst.

4. Adapter nach Anspruch 3, **dadurch gekennzeichnet, dass** der erste (12; 112; 212) und der zweite (14; 114; 214) Kopf jeweils ein Antriebsende mit Buchsenprofil (24; 124; 224) und ein angetriebenes Ende mit Steckprofil (50; 150 250) umfassen.

5. Adapter nach einem der Ansprüche 3 bis 4, **dadurch gekennzeichnet, dass** er außerdem eine äußere Beschichtung (380) aus elektrisch isolierendem Material umfasst, die insbesondere 1 oder mehrere Schichten, die durch Härten erhalten wird/werden, umfasst.

6. Einsatz eines Adapters (310) nach einem der Ansprüche 3 bis 5 zum Schrauben oder Abschrauben der Elemente, die unter einer elektrischen Spannung gehalten werden, die kleiner oder gleich 1000 Volt Wechselstrom und kleiner oder gleich 1500 Volt Gleichstrom ist, insbesondere für das Installieren oder für die Wartung von Versorgungsbatterien von Elektrofahrzeugen.

## Claims

1. Electrically insulating rotational coupling device (10; 110; 210) comprising a first (12; 112; 212) and a second (14; 114; 214) coupling head extending in a substantially straight line along a longitudinal axis (X-X), the first head comprising at least one male part (26; 126; 226) extending substantially axially, and the second head comprising at least one associated axial female part (42; 142; 242) working therewith to transmit the rotational torque, the male and female parts being adapted to form an assembly joint between the first (12; 112; 212) and second (14; 114; 214) heads; an intermediate member (16; 116; 216) comprising electrical insulation means (52, 54, 56, 58) arranged in such a way that the male (26; 126; 226) and female (42; 142; 242) rotational torque transmission parts are electrically insulated from each other, **characterised in that** the intermediate member (16; 116; 216) comprises an electrically insulating partition (62; 162; 262) which is transverse in relation to the longitudinal axis (X-X) and is arranged according to the entirety of the assembly joint between the first (12; 112; 212) and second (14; 114; 214) heads and **in that** the intermediate member comprises a central portion (52) extending axially along the longitudinal axis (X-X) and delimited by two transverse end faces (54, 56), **in that** at least one of the first (12; 112; 212) and second (14; 114; 214) heads is a steel machined part, and **in that** the intermediate member (16; 116; 216) is a moulded part made of a plastic material with a high dielectric strength.

2. Device according to claim 1, **characterised in that** the electrical insulation means (52, 54, 56, 58) and the transverse electrically insulating partition (62; 162; 262) of the intermediate member (16; 116; 216) are formed in one piece.

3. Adapter (310) that can be coupled to at least one tool, the adapter comprising a drive end (24; 124; 224) that can be connected to a first drive tool, in particular a screwing machine, and a driven end (50; 150 250) that can be connected to a second driven tool, in particular a screw bushing, **characterised in that** it comprises a coupling device (10; 110; 210) according to any one of claims 1 to 2.

4. Adapter according to claim 3, **characterised in that** the first (12; 112; 212) and second (14; 114; 214) heads each comprise a female profile drive end (24; 124; 224) and a male profile driven end (50; 150 250).

5. Adapter according to any one of claims 3 to 4, **characterised in that**, it additionally comprises an outer coating (380) made of electrically insulating material, in particular comprising 1 or more layer(s) obtained by dipping.

6. Use of an adapter (310) according to any one of claims 3 to 5 for screwing or unscrewing members kept under an electrical voltage less than or equal to 1,000 volts in alternating current and less than or equal to 1,500 volts in direct current, in particular for installing or maintaining batteries for powering electric vehicles.
